# EUROPEAN PATENT SPECIFICATION

(11) **EP 2 158 142 B1**
(45) Date of publication and mention of the grant of the patent: **19.08.2015**
(21) Application number: 08827396.6
(22) Date of filing: 14.05.2008
(51) Int. Cl.: B65F 5/00

(54) **A METHOD OF MANAGING WASTE AND A SYSTEM FOR COLLECTING WASTE**
VERFAHREN ZUR ABFALLVERWALTUNG UND ABFALLSAMMLUNGSSYSTEM
PROCÉDÉ DE GESTION DES DÉCHETS ET SYSTÈME DE COLLECTE DES DÉCHETS

(30) Priority: 11.06.2007 SE 0701432
(43) Date of publication of application: 03.03.2010
(73) Proprietor: Envac AB, 112 26 Stockholm (SE)
(72) Inventor: JOHANSSON, Jan-Erik, SE-745 92 Enköping (SE); EKHOLM, Magnus, S-431 49 Mölndal (SE)
(74) Representative: Hedman, Anders
(86) International application number: PCT/SE2008/050569
(87) International publication number: WO 2009/022964

(56) References cited:
- EP-A1- 0 105 683
- EP-A1- 1 544 133
- WO-A1-2006/135296
- WO-A1-2006/135296
- FR-A1- 2 900 138
- JP-A- 01 252 403
- JP-A- 01 252 404
- JP-A- 2011 097 206

## Description

### TECHNICAL FIELD

This invention generally concerns the collection and transport of waste by means of vacuum and specifically relates to a waste collection system wherein waste is transported considerable distances by vacuum pressure from collection or deposit points and to a central collection station.

### BACKGROUND

Vacuum operated waste collection systems are frequently used for collecting mainly domestic or office waste in residential or business areas, but also for collecting hospital waste etc. In such systems, deposited waste is transported in a pipe system by vacuum pressure. In particular, in the so called "stationary system" the deposited waste is sucked from separate, spaced deposit points and to a central collection station wherein the waste is collected in large storage tanks. The storage tanks are then picked up by special trucks and transported to sites where the waste is burned or disposed of in other ways. Such a conventional management of waste collected in a stationary system is burdened by high transport costs on account of the fact that the waste is transported to the specified site, in most cases in an uncompressed state, in the moveable tanks that must then be returned. The collection stations of the stationary systems are in most cases placed above ground, thereby requiring ground space and in certain cases creating environmental nuisance in the form of smell and noise. In the existing underground collection terminals the installations suffer from security hazards that relate to the transfer of the filled tanks to the transport trucks. For such transfer there is frequently used lift tables, overhead cranes, crane carriages etc. that may cause considerable injuries by squeezing and crushing.

WO2006/135296A1 discloses the emptying of waste collection tanks by means of vacuum applied thereto through a pipe system, from a stationary vacuum source or alternatively from a vacuum truck. Waste is here introduced into the tank by means of gravity, and specifically the waste items are inserted into a vertical gravity chute through waste inlets and fall into the tank through an upper supply opening.

### SUMMARY

It is a general object of the invention to provide safe and cost effective waste management.

It is a specific object of the invention to provide an improved method of managing waste in a vacuum operated waste collection system, by enabling collection of waste from distributed deposit points in the system at competitive cost.

It is a further specific object of the invention to suggest an improved vacuum waste collection system for collecting waste from distributed deposit points in the system at competitive cost.

These and other objects are met by the invention as defined by the accompanying patent claims.

To achieve the above stated objects the invention suggests a method of managing waste according to claim 1.

In another aspect the invention suggests an improved vacuum operated waste collection system according to claim 4.

Preferred further developments of the basic inventive idea as well as embodiments thereof are specified in the dependent subclaims.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1: is a partly schematical illustration of a first embodiment of the invention as applied to an exemplary waste collection system;
- Fig.2: is a partly schematical illustration of the application of the invention to an alternative waste collection system;
- Figs. 3-4: are partly schematical illustrations of other waste collection system configurations where the invention may be applied; and
- Fig.5: is a partly schematical illustration of an alternative waste collection system not part of the present invention.

### DETAILED DESCRIPTION

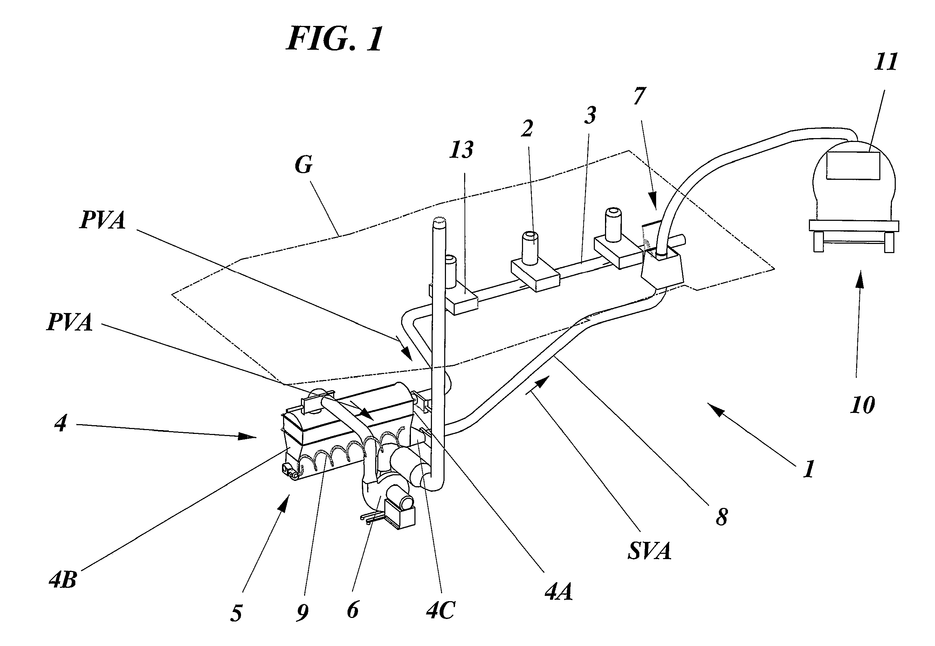

The invention will now be explained with reference to exemplifying embodiments of a waste collection system of the invention, which are illustrated in the accompanying drawing figures. Exemplifying applications of the invention are illustrated in Figs. 1-***4***, and relate to applications of the inventive solution to partially and very schematically outlined stationary type vacuum waste collection systems. It shall be emphasized, though that the illustrations are for the purpose of describing preferred embodiments of the invention and are not intended to limit the invention to the details thereof.

The above briefly discussed, conventional vacuum waste collection system of the stationary type provides a very advantageous waste management solution with regard to the fact that a powerful exhauster may be provided as the stationary vacuum source. This enables the transfer of collected waste over considerable distances in applications where the deposit points, such as the so called litter bins, are distributed over a large area. The high waste transfer capacity in heavily loaded applications is another advantage made possible by the use of powerful stationary exhausters in combination with large transport pipe diameters. However, as described initially, in such systems the transport economy and/or ergonomics are far from optimal.

Within the field of waste management there is also a so called "mobile system" wherein waste is deposited into and temporarily stored at collection points directly underneath the actual deposit point or waste insert. At the collection points the waste is stored in storage tanks that are emptied using a vacuum truck carrying a vacuum source. Although presenting a favorable waste transport solution, said mobile system is limited with regard to the possible transfer distance of the waste to be emptied from the tank, since the vehicle carried vacuum source has a limited maximum capacity. Since this system requires one complete waste storage tank, often with an agitator, at each deposit point it will be necessary for cost reasons to limit the number of deposit points in an area. Otherwise, investment as well as installation costs will in many cases be unacceptably high.

To overcome the above described disadvantages and problems with presently performed waste management, the present invention suggests a novel approach for a vacuum waste collection system. The suggested novel approach briefly involves providing a hybrid system using the most favorable parts of the stationary as well as the mobile systems. Specifically, the invention suggests starting out from a stationary type system and integrating therein a storage tank and its emptying procedure from the mobile system. Such a configuration will provide an efficient, practical and economical use of selected parts of each basic system and will - especially in underground applications - additionally reduce safety hazards for service personnel and other personnel and provide environmental benefits. The inventive system may be particularly favorable for applications where the waste volumes are relatively small, such as in the so called "litter bin systems, and where it is therefore desirable to avoid large investments. However, it shall be emphasized that the invention is not to be restricted to such systems, but shall be applicable to all types of waste collection systems where it will be beneficial.

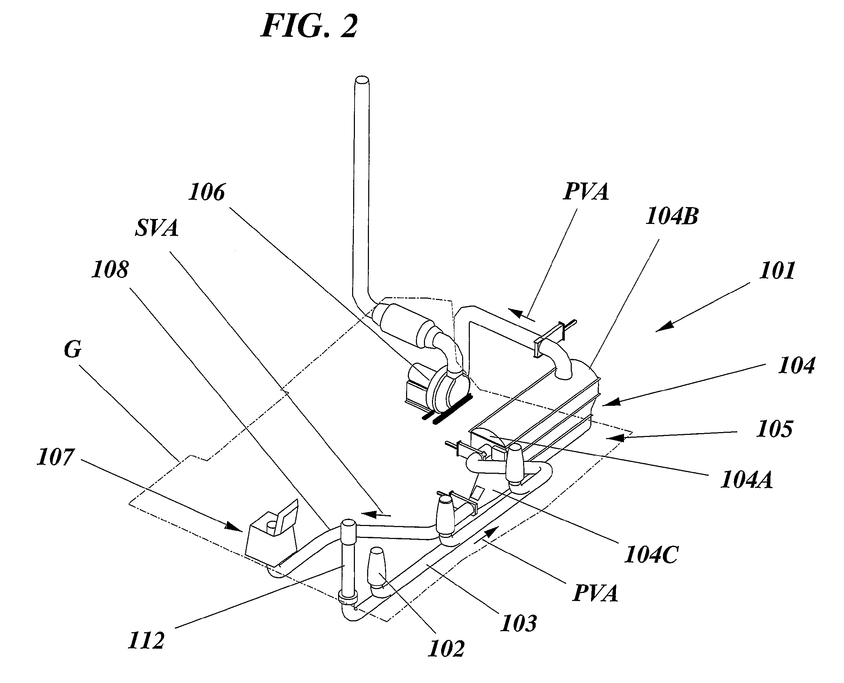

One exemplary embodiment of an application of the basic principles of the invention to a waste collection system 1 is illustrated in Fig. 1, whereas Fig. 2 illustrates an application of said embodiment of the invention to an alternative waste collection system configuration. Specifically, Fig. 1 illustrates the use of the inventive solution in a briefly illustrated vacuum operated waste collection system 1 having several spaced deposit points 2 consisting of so called litter bin inserts that are each connected to a primary transport pipe system 3 through a discharge valve 13. The primary transport pipe 3 is in turn connected generally to a first end 4A of a waste storage tank 4 in a central waste collection station or terminal 5. The waste collection station 5 comprises a stationary vacuum source 6 that is connected to the collection station waste storage tank 4 generally at a second end 4B of the tank 4, for producing a primary vacuum air flow PVA through the tank and in the transport pipe system 3 for intermittently transporting deposited waste from the deposit points 2 to the waste storage tank 4. The tank 4 contains a separator (not specifically illustrated) by means of which the primary vacuum air PVA is separated from the transported waste in a manner that is known per se.

The central waste storage tank 4 communicates also with a first end of a secondary transport pipe 8 that is connected generally to said first end 4A of the waste storage tank 4, but separate from the primary waste transport pipe 3. The secondary waste transport pipe 8 leads up to and is at a second end thereof connected to a docking point 7. The secondary waste transport pipe 8 is intended for connection, through the docking point 7, to a conventional mobile vacuum truck 10 having a vehicle carried vacuum source 11 onboard to apply a secondary vacuum air flow SVA to the central storage tank 4, for emptying the latter. It will be noted that the stationary vacuum source 6 is connected to the central waste storage tank 4 at a position spaced from the secondary transport pipe 8. More specifically the stationary vacuum source 6 is connected generally to a second end 4B of the central waste storage tank and the secondary transport pipe 8 is connected to an outlet 4C from the waste storage tank 4 that is positioned generally at the first end 4A of the central waste storage tank 4.

The central waste collection station 5 with the waste storage tank 4 is in the exemplary embodiment installed under ground G to achieve the best environmental benefits and to save ground space. However the invention is not restricted to such underground applications and may likewise be used in applications above ground or partly under ground, such as partly inside a residential building and partly in an underground parking garage, or completely inside a parking garage with only the deposit points positioned above ground. As is schematically indicated in Fig. 1 an agitator 9 is installed in the central waste storage tank 4 for enhancing emptying of the tank by agitating the waste and/or feeding the collected and stored waste towards the tank outlet 4C.

The method of managing waste in accordance with this embodiment of the invention comprises the conventional step of collecting deposited waste at the central waste collection station 5. This step is performed by transporting waste deposited at the several distributed deposit points 2 in a primary transport pipe system 3 to a central waste storage tank 4 at the waste collection station 5 by applying a primary vacuum air flow PVA from the stationary vacuum source 6 at the collection station. Then, in a further step that is unique for the invention, and that is performed at a separate time from the waste collection from the deposit points 2, the waste that has been collected in the waste collection station storage tank 4 is emptied therefrom by applying the secondary vacuum air SVA to the storage tank from the conventional mobile vacuum truck 10 with its vacuum source 11.

The primary and secondary vacuum air flows PVA and SVA, respectively are applied separately to the central storage tank 4, also with regard to the position, and specifically the primary vacuum air PVA is applied generally to the second end 4B of the central waste storage tank 4 and the secondary vacuum air SVA is applied generally to the first end 4A of the central waste storage tank. In particular, the secondary vacuum air is applied to an outlet 4C from the waste storage tank 4 at said first end 4A, by said vehicle carried vacuum source 11 of the vacuum truck 10, and through the docking point 7 and the secondary transport pipe 8. In the presently preferred embodiment emptying of the central waste storage tank 4 is enhanced by agitating the waste and/or feeding the waste towards the outlet 4C in the tank 4 by means of the agitator 9 installed in the tank.

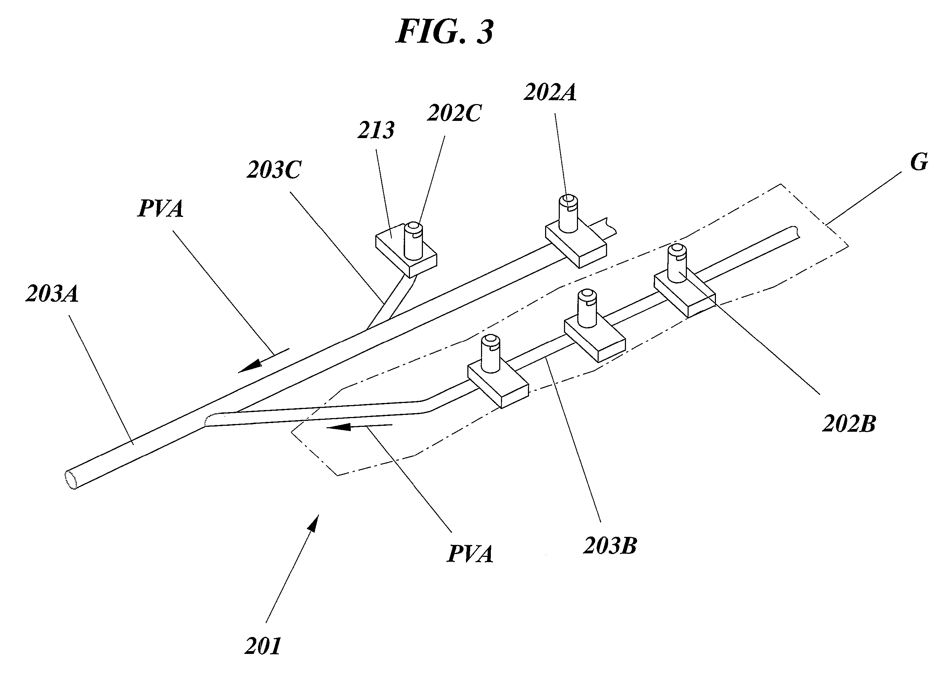

In alternative configurations the invention may be applied to variations of the known vacuum operated waste collection system, as will be schematically illustrated in Fig. 2 and even more schematically in Figs. 3-4. Such variations may be employed without departing from the scope of the invention. The example illustrated in Fig. 2 concerns an application of the invention to a waste collection system 101 that comprises a so called low rise deposits 102 and a transport pipe system 103 where litter bins 102 are communicating directly with the transport pipe 103 without any discharge valve at the deposit points 102. An air intake 112 is positioned at the distal end of the transport pipe 102. In all other respects the configuration of this system is equal to that of Fig. 1, and the corresponding parts are designated with the same numbers with the addition of 100.

In Figs 3-4 are illustrated alternative, branched deposit point and transport pipe systems 201 and 301, respectively, where the invention may preferably be applied. The waste collection central is not shown in these drawing figures, but it shall be realized that it will have the same general design as the one shown in Figs. 1 and 2.

In Fig. 3 is illustrated a waste collection system 201 containing a transport pipe system having a main pipe 203A as well as a branch pipes 203B and 203C, all provided with spaced deposit points 202A, 202B and 202C, respectively, communicating with the respective pipes through discharge valves 213.

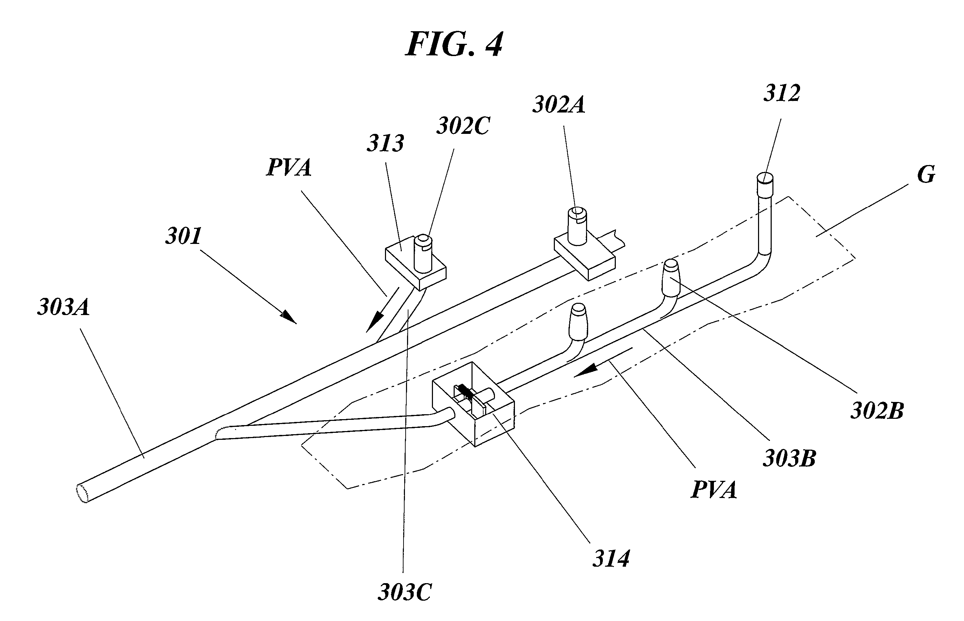

In Fig. 4 is illustrated a waste collection system 301 that likewise contains a transport pipe system having a main pipe 303A as well as branch pipes 303B and 303C. In this system 301, the main pipe 303A and the branch pipe 303C are provided with the same type of deposit points 302A and 302C, respectively, that communicate with the respective pipes 303A and 303C through discharge valves 313. The branch pipe 303B is provided with an air inlet 312 at the distal end and contains two deposit points 302B of the above described type that communicate directly with the branch pipe 303B. Furthermore, in this case, a branch valve 314 controls the communication of the branch 303B with the main pipe 303A, in order to control the application of the primary vacuum air to said branch pipe 303B. For both of the configurations illustrated in Figs. 3-4 the main pipe 203A, 303A is only partially illustrated, and may contain further branches and/or deposit points than the ones shown.

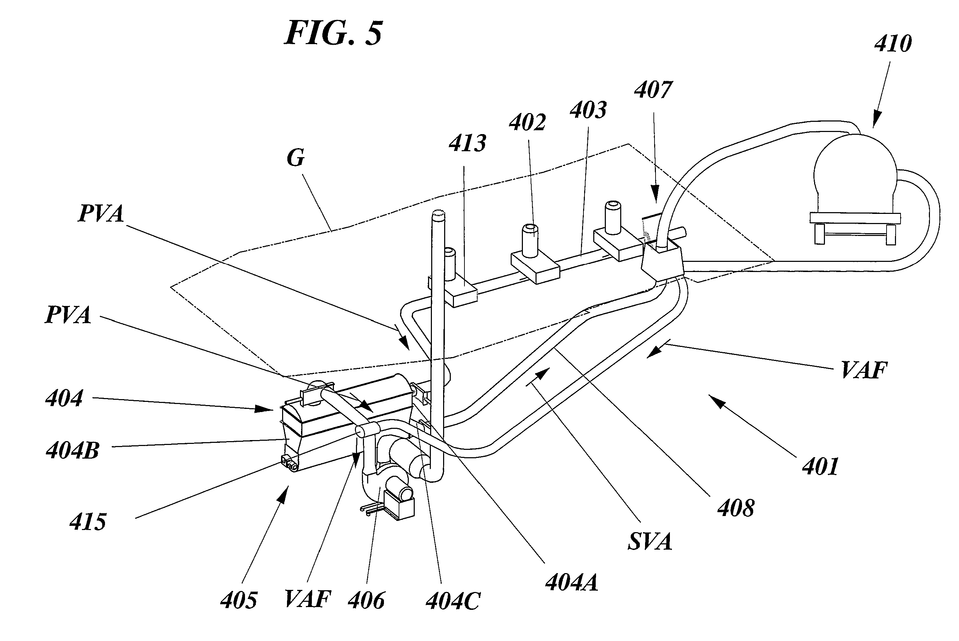

Finally, Fig. 5 illustrates an alternative waste collection system 401 not part of the present invention . This system 401 contains the transport pipe system 403 being provided with deposit points 402 that communicate with the transport pipe 403 through discharge valves 413. The collection station 405 likewise contains the storage tank 404, the stationary vacuum source 406 and the secondary transport pipe 408 with its docking station 407. The essential difference between this system and the one disclosed in connection with Fig. 1 is that here the vacuum truck 410 is not provided with a vehicle carried vacuum source. Instead, for emptying of the tank 404, a vacuum air flow VAF produced by the stationary vacuum source 406 at the station 405 is selectively redirected, by means of a diverter valve 415, through the vacuum truck 410 to produce the secondary vacuum air flow SVA in the secondary transport pipe 408. In this system a much simpler and therefore less expensive as well as lighter truck 410 may be employed that in essence acts as a vacuum-tight pre-separator with compactor. Such a configuration would enable the use of a lighter truck 410 that might have an additional waste transport capacity of maybe up to 2 tons, which would greatly improve the transport economy. The emptying procedure would create much less noise, thereby leading to environmental benefits for the overall waste management. In Fig. 5 is illustrated a schematical diverter valve 415 that exemplifies that this system requires a controlled change-over function for directing the vacuum air flow either directly through the storage tank 404 as a primary vacuum air flow PVA or through the vacuum truck and the secondary transport pipe 408 to the tank 404 as a secondary vacuum air flow SVA. In Fig. 5 is also illustrated that the redirected air flow is connected to the truck 410 through the docking point 407. It should be pointed out that this connection may alternatively be performed at a separate, not shown docking station.

The invention has been described in connection with what is presently considered the most practical and preferred embodiments, but it is to be understood that the invention is not limited to the disclosed embodiments. The invention is therefore intended to cover various modifications and equivalent arrangements included within the scope of the appended claims.

## Claims

1. A method of managing waste, wherein waste deposited at several distributed deposit points (2; 102; 202A, 202B; 302A, 302B) is transported in a primary transport pipe system (3; 103; 203A, 203B, 203C; 303A, 303B, 303C) to a central waste storage tank (4; 104) at a central waste collection station (5; 105) by applying to the central waste storage tank a primary vacuum air flow (PVA) from a vacuum air flow (VAF) produced by a stationary vacuum source (6; 106) at the collection station, wherein emptying waste from the deposit points, collected in the central waste collection station storage tank, by separately, at a separate time from the waste collection from the deposit points, is achieved by applying a secondary vacuum air flow (SVA) to the central storage tank (4; 104) from a conventional mobile vacuum truck (10) having a vehicle carried vacuum source (11) onboard and by applying the primary vacuum air flow (PVA) generally to a second end (4B; 104B) of the central storage tank (4; 104) and applying the secondary vacuum air flow (SVA) generally to a first end (4A; 104A) of the central waste storage tank.

2. A method according to claim 1, **characterized by** connecting the vacuum truck (10) to an outlet (4C; 104C) of the waste storage tank (4; 104) at said first end (4A; 104A) thereof, through a docking point (7; 107) and a secondary transport pipe (8; 108).

3. A method according to claims 1 or 2 , **characterized by** enhancing emptying of the central waste storage tank (4; 104) by agitating the waste and/or feeding the waste towards the outlet (4C; 104C) from the tank (4; 104) by means of an agitator (9) installed in the storage tank.

4. A vacuum operated waste collection system (1; 101; 201; 301) having several spaced deposit points (2; 102; 202A, 202B; 302A, 302B), a primary transport pipe system (3; 103; 203A, 203B, 203C; 303A, 303B, 303C) connected to the deposit points and to a central waste collection station (5; 105) having a stationary vacuum source (6; 106) producing a vacuum air flow (VAF) and being connected to a central waste storage tank (4; 104) in the collection station for applying a primary vacuum air flow (PVA) to the primary transport pipe system for intermittently transporting deposited waste from the deposit points to the waste storage tank (4; 104), wherein the central waste collection station storage tank (4; 104) communicates also with a secondary transport pipe (8; 108) for connection, via a docking point (7; 107), to a conventional mobile vacuum truck (10) having a vehicle carried vacuum source (11) onboard to apply a secondary vacuum air flow (SVA) to the storage tank, and wherein the stationary vacuum source (6; 106) is connected generally to a second end (4B; 104B) of the central waste storage tank (4; 104), at a position separate from a connection of the secondary transport pipe (8; 108) to an outlet (4C; 104C) from the waste storage tank (4; 104), generally at a first end (4A; 104A) of the central waste storage tank.

5. A vacuum operated waste collection system (1; 101; 201; 301) according to claim 4 **characterized in that** the central waste collection station (5; 105) with the central waste storage tank (4; 104) is installed under ground (G).

6. A vacuum operated waste collection system (1; 101; 201; 301) according to any of claims 4 or 5 **characterized by** an agitator (9) installed in the central waste storage tank (4; 104) for enhancing emptying of the tank by agitating the waste and/or feeding the waste towards the outlet (4C; 104C) from the tank (4; 104).

## Patentansprüche

1. Verfahren zur Abfallverwaltung, wobei Abfall, der an verschiedenen verteilten Ablagerungsstellen (2; 102; 202A, 202B; 302A, 302B) abgelagert wurde, in einem primären Transportrohrleitungssystem (3; 103; 203A, 203B, 203C; 303A, 303B, 303C) zu einem zentralen Abfalllagerungstank (4; 104) in einer zentralen Abfallsammelstation (5; 105) transportiert wird, indem an den zentralen Abfalllagerungstank ein primärer Saugluftstrom (PVA) von einem Saugluftstrom (VAF) angelegt wird, der von einer stationären Unterdruckquelle (6; 106) an der Sammelstation erzeugt wird, wobei das Entleeren von Abfall von den Ablagerungsstellen, der in dem Lagerungstank der zentralen Abfallsammelstation gesammelt wird, durch separates Anlegen, zu einem von der Abfallsammlung von den Ablagerungsstellen getrennten Zeitpunkt, eines sekundären Saugluftstroms (SVA) an den zentralen Lagerungstank (4; 104) von einem herkömmlichen mobilen Saugwagen (10) mit einer im Fahrzeug beförderten integrierten Unterdruckquelle (11) erreicht wird sowie durch Anlegen des primären Saugluftstroms (PVA) ganz allgemein an ein zweites Ende (4B; 104B) des zentralen Lagertanks (4; 104) und Anlegen des sekundären Saugluftstroms (SVA) ganz allgemein an ein erstes Ende (4A; 104A) des zentralen Abfalllagerungstanks.

2. Verfahren nach Anspruch 1, **gekennzeichnet durch** ein Anschließen des Saugwagens (10) an eine Austrittsöffnung (4C; 104C) des Abfalllagerungstanks (4; 104) an dem ersten Ende (4A; 104A) davon über einen Ankopplungspunkt (7; 107) und eine sekundäre Transportrohrleitung (8; 108).

3. Verfahren nach Anspruch 1 oder 2, **gekennzeichnet durch** ein Verbessern des Entleerens des zentralen Abfalllagerungstanks (4; 104) **durch** Verrühren des Abfalls und/oder Vorwärtsbewegen des Abfalls in Richtung der Austrittsöffnung (4C; 104C) aus dem Tank (4; 104) mittels eines Rührers (9), der in dem Lagerungstank eingebaut ist.

4. Saugbetätigtes Abfallsammlungssystem (1; 101; 201; 301) mit mehreren beabstandeten Ablagerungsstellen (2; 102; 202A, 202B; 302A, 302B), einem primären Transportrohrleitungssystem (3; 103; 203A, 203B, 203C; 303A, 303B, 303C), das an die Ablagerungsstellen und an eine zentrale Abfallsammelstation (5; 105) mit einer stationären Unterdruckquelle (6; 106) angeschlossen ist, die einen Saugluftstrom (VAF) erzeugt und an einen zentralen Abfalllagerungstank (4; 104) in der Sammelstation angeschlossen ist, damit ein primärer Saugluftstrom (PVA) an das primäre Transportrohrleitungssystem angelegt wird, um abgelagerten Abfall periodisch von den Ablagerungsstellen zum Abfalllagerungstank (4; 104) zu transportieren, wobei der Lagerungstank (4; 104) der zentralen Abfallsammelstation auch mit einer sekundären Transportrohrleitung (8; 108) zum Anschließen, über einen Ankopplungspunkt (7; 107), an einen herkömmlichen mobilen Saugwagen (10) mit einer im Fahrzeug beförderten integrierten Unterdruckquelle (11) zum Anlegen eines sekundären Saugluftstroms (SVA) an den Lagerungstank in Verbindung steht, und wobei die stationäre Unterdruckquelle (6; 106) ganz allgemein an ein zweites Ende (4B; 104B) des zentralen Abfalllagerungstanks (4; 104) angeschlossen ist, an einer Position getrennt von einem Anschluss der sekundären Transportrohrleitung (8; 108) an eine Austrittsöffnung (4C; 104C) aus dem Abfalllagerungstank (4; 104) ganz allgemein an einem ersten Ende (4A; 104A) des zentralen Abfalllagerungstanks.

5. Saugbetätigtes Abfallsammlungssystem (1; 101; 201; 301) nach Anspruch **4, dadurch gekennzeichnet, dass** die zentrale Abfallsammelstation (5; 105) mit dem zentralen Abfalllagerungstank (4; 104) unter dem Erdboden (G) installiert ist.

6. Saugbetätigtes Abfallsammlungssystem (1; 101; 201; 301) nach Anspruch 4 oder 5, **gekennzeichnet durch** einen Rührer (9), der zum Verbessern des Entleerens des Tanks **durch** Verrühren des Abfalls und/oder Vorwärtsbewegen des Abfalls in Richtung der Austrittsöffnung (4C; 104C) aus dem Tank (4; 104) in dem zentralen Abfalllagerungstank (4; 104) eingebaut ist.

## Revendications

1. Procédé de gestion des déchets, dans lequel des déchets déposés dans plusieurs points de dépôts (2 ; 102 ; 202A, 202B ; 302A, 302B) répartis sont transportés dans un premier système de tuyaux de transport (3 ; 103 ; 203A, 203B, 203C ; 303A, 303B, 303C) jusqu'à un réservoir central de stockage de déchets (4 ; 104) dans une station centrale de collecte de déchets (5 ; 105) en appliquant au réservoir central de stockage de déchets un premier flux d'air d'aspiration (PVA) provenant d'un flux d'air d'aspiration (VAF) produit par une source d'aspiration stationnaire (6 ; 106) dans la station de collecte, dans lequel le vidage des déchets des points de dépôt, collectés dans le réservoir de stockage de la station centrale de collecte de déchets, est effectué en appliquant séparément, à un moment séparé de la collecte des déchets des points de dépôt, un second flux d'air d'aspiration (SVA) au réservoir central de stockage (4 ; 104) provenant d'un camion d'aspiration (10) mobile conventionnel présentant une source d'aspiration (11) de bord embarquée sur le véhicule et en appliquant le premier flux d'air d'aspiration (PVA) de manière générale à une seconde extrémité (4B ; 104B) du réservoir central de stockage (4 ; 104) et en appliquant le second flux d'air d'aspiration (SVA) de manière générale à une première extrémité (4A ; 104A) du réservoir central de stockage de déchets.

2. Procédé selon la revendication 1, **caractérisé par** le raccordement du camion d'aspiration (10) à une sortie (4C ; 104C) du réservoir de stockage de déchets (4 ; 104) à ladite première extrémité (4A ; 104A) de celui-ci, par le biais d'un point de jonction (7 ; 107) et d'un second tuyau de transport (8 ; 108).

3. Procédé selon les revendications 1 ou 2, **caractérisé par** l'amélioration du vidage du réservoir central de stockage de déchets (4 ; 104) en agitant les déchets et/ou en alimentant les déchets vers la sortie (4C ; 104C) du réservoir (4 ; 104) au moyen d'un agitateur (9) installé dans le réservoir de stockage.

4. Système de collecte des déchets (1 ; 101 ; 201 ; 301) fonctionnant par aspiration, présentant plusieurs points de dépôts (2 ; 102 ; 202A, 202B ; 302A, 302B) espacés, un premier système de tuyaux de transport (3 ; 103 ; 203A, 203B, 203C ; 303A, 303B, 303C) raccordé aux points de dépôt et à une station centrale de collecte de déchets (5 ; 105) présentant une source d'aspiration stationnaire (6 ; 106) produisant un flux d'air d'aspiration (VAF) et qui est raccordée à un réservoir central de stockage de déchets (4 ; 104) dans la station de collecte pour appliquer un premier flux d'air d'aspiration (PVA) au premier système de tuyaux de transport afin de transporter par intermittence des déchets déposés des points de dépôts au réservoir de stockage de déchets (4 ; 104), dans lequel le réservoir de stockage (4 ; 104) de la station centrale de collecte de déchets communique également avec un second tuyau de transport (8 ; 108) pour le raccordement, par le biais d'un point de jonction (7 ; 107), à un camion d'aspiration (10) mobile conventionnel présentant une source d'aspiration (11) de bord embarquée sur le véhicule pour appliquer un second flux d'air d'aspiration (SVA) au réservoir de stockage, et dans lequel la source d'aspiration stationnaire (6 ; 106) est raccordée de manière générale à une seconde extrémité (4B ; 104B) du réservoir central de stockage de déchets (4 ; 104), dans une position séparée d'un raccordement du second tuyau de transport (8; 108) à une sortie (4C ; 104C) du réservoir de stockage de déchets (4 ; 104), de manière générale à une première extrémité (4A ; 104A) du réservoir central de stockage de déchets.

5. Système de collecte de déchets (1 ; 101 ; 201 ; 301) fonctionnant par aspiration selon la revendication 4, **caractérisé en ce que** la station centrale de collecte de déchets (5 ; 105) avec le réservoir central de stockage de déchets (4 ; 104) est installée sous terre (G).

6. Système de collecte de déchets (1; 101 ; 201 ; 301) fonctionnant par aspiration selon l'une quelconque des revendications 4 ou 5, **caractérisé par** un agitateur (9) installé dans le réservoir central de stockage de déchets (4 ; 104) pour améliorer le vidage du réservoir en agitant les déchets et/ou en alimentant les déchets vers la sortie (4C ; 104C) du réservoir (4 ; 104).
